# EUROPEAN PATENT APPLICATION

(11) **EP 2 548 779 A2**
(43) Date of publication of application: **23.01.2013**
(21) Application number: 12177042.4
(22) Date of filing: 19.07.2012
(51) Int. Cl.: B60W 10/08, B60W 20/00, B60W 10/26, B60W 30/188, B60W 50/08

(54) **Control unit for hybrid vehicle**

(30) Priority: 20.07.2011 JP 2011158936
(71) Applicant: Mitsubishi Jidosha Kogyo Kabushiki Kaisha, Tokyo 108-8410 (JP)
(72) Inventor: Yagura, Hirofumi, Tokyo 108-8410 (JP); Saito, Jun, Tokyo 108-8410 (JP)
(74) Representative: Regimbeau

(57) **Abstract**

A control unit (30) for a hybrid vehicle (10) is provided. The hybrid vehicle (10) includes an engine (16) and a motor (14) and is configured to be switched between a motor driving mode in which the vehicle (10) is driven by the motor (14), an engine driving mode in which the vehicle (10) is driven by the engine (16) and a hybrid driving mode in which the hybrid vehicle (10) is driven by both of the motor (14) and the engine (16). The control unit (30) includes a required output determination device (28B) that determines a required output based on an output characteristic in which an operation amount of an accelerator pedal (24) and a drive output corresponding to the operation amount are related to each other. The output characteristic in the motor driving mode is such that an increase rate of the drive output is decreased as the operation amount is increased.

## Description

### BACKGROUND

The present invention is related to a control unit for a hybrid vehicle.

As hybrid vehicles which include an engine and a motor, there are known hybrid vehicles which can be switched between a motor driving in which the vehicle is driven by using the motor only and an engine driving in which the vehicle is driven by using the engine. In hybrid vehicles of this type, in driving, the vehicle is switched to the motor driving in which the vehicle is driven by the motor which can generate a high driving force at low motor revolution speeds when the vehicle is driven at low vehicle speeds, whereas when being driven at middle or high vehicle speeds, the vehicle is switched to the engine driving in which the vehicle is driven by the engine which can generate a high driving force at middle and high engine revolution speeds.

In this case, the switching from the motor driving to the engine driving is implemented when the accelerator pedal opening reaches or exceeds a predetermined value during the motor driving.

Incidentally, when the vehicle is attempted to be driven while giving priority to quietness or low fuel consumption, it is desired that the rate of operation of the engine is lowered by suppressing the switching from the motor driving to the engine driving.

Then, there has been proposed a technique in which a characteristic to determine a driving force (a required output torque) relative to an accelerator pedal opening can be changed by enabling the selection between a driving mode which permits the switching to the engine driving and a driving mode which suppress the switching to the engine driving (refer to JP-A-2008-174159).

In this technique, the aforesaid characteristic is changed so that the driving force (the required output torque) relative to the accelerator pedal opening is lowered more in the latter driving mode than in the former driving mode.

### SUMMARY

In the related art described above, however, since the characteristic is such that the increase rate of the required output torque is decreased as the accelerator pedal opening is increased, in the latter driving mode, the required output torque relative to the accelerator pedal opening is suppressed strongly as the vehicle speed is decreased.

Because of this, the accelerating response is decreased largely when the vehicle is started from a standstill or is being driven at low vehicle speeds, which causes a concern that the accelerating performance is lowered.

It is therefore one advantageous aspect of the present invention to provide a control unit for a hybrid vehicle which is advantageous in realizing a driving which ensures the accelerating response while suppressing accurately the switching from the motor driving to the engine driving.

According to one aspect of the invention, there is provided a control unit for a hybrid vehicle which includes an engine and a motor and which is configured to be switched between a motor driving mode in which the vehicle is driven by the motor, an engine driving mode in which the vehicle is driven by the engine and a hybrid driving mode in which the hybrid vehicle is driven by both of the motor and the engine, characterized in comprising:
a required output determination device configured to determine a required output based on an output characteristic in which an operation amount of an accelerator pedal and a drive output corresponding to the operation amount are related to each other,
wherein the output characteristic in the motor driving mode is such that an increase rate of the drive output is decreased as the operation amount is increased.

The control unit for a hybrid vehicle may further comprise a remaining charge level detection device configured to detect a remaining charge level of a battery which supplies electric power to the motor, wherein the drive output corresponding to an operation amount of the accelerator pedal is decreased as the remaining charge level is decreased.

The control unit for a hybrid vehicle may further comprise a selecting device configured to select a suppression mode in which the required output corresponding to the operation amount is suppressed, when a driver input is received, wherein, in a state where the suppression mode is selected by the selection device, the required output determination device determines the required output based on the output characteristic.

### BRIEF DESCRIPTION OF DRAWINGS

Fig. 1 is a block diagram showing an overall configuration of a vehicle 10 in which a control unit 30 for a hybrid vehicle according to a first embodiment is installed.
Fig. 2 is an output characteristic map showing an output characteristic according to the first embodiment.
Fig. 3 is a flowchart illustrating the operation of the control unit 30 for a hybrid vehicle according to the first embodiment.
Fig. 4 is a block diagram showing an overall configuration of a vehicle 10 in which a control unit 30 for a hybrid vehicle according to a second embodiment is installed.
Fig. 5 is a diagram specifying a relation between SOC and drive output suppressing rate ρ according to the second embodiment.
Fig. 6 is an output characteristic map showing an output characteristic according to the second embodiment.
Fig. 7 is a flowchart illustrating the operation of the control unit 30 for a hybrid vehicle according to the second embodiment.

### DETAILED DESCRIPTION OF EXEMPLIFIED EMBODIMENTS

### (First Embodiment)

Hereinafter, embodiments of the invention will be described by reference to the drawings.

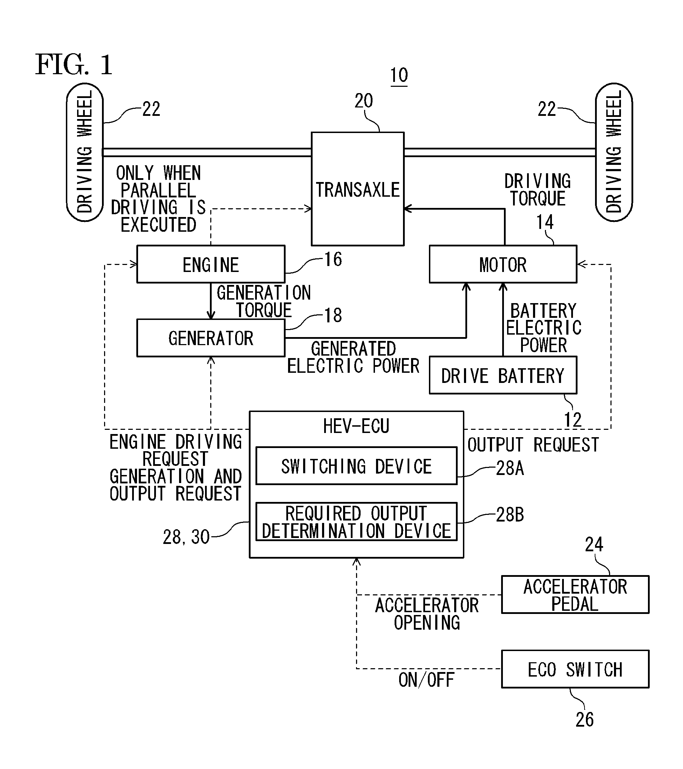

As shown in Fig. 1, a vehicle 10 is a hybrid vehicle.

The vehicle 10 includes a drive battery 12, a motor 14, an engine 16, a generator 18, a transaxle 20, driving wheels 22, an accelerator pedal 24, an eco switch 26, and an HEV-ECU (hereinafter, referred to as an ECU) 28. The ECU 28 configures a control unit 30 of the invention.

The drive battery 12 supplies electric power to the motor 14.

The motor 14 is driven to rotate by battery electric power that is supplied from the drive battery 12 and generated electric power that is supplied from the generator 18 to thereby supply power (driving torque) to the driving wheels 22 by way of the transaxle 20, whereby the driving wheels 22 are driven.

The engine 16 supplies power (generating torque) to the generator 18 to thereby drive the generator 18 for generation. The generator 18 generates electric power by the power supplied by the engine 16 and supplies the generated electric power to the motor 14.

The transaxle 20 distributes the power supplied from the motor 14 to transmit it to the two driving wheels 22.

The driving wheels 22 are driven to rotate by the power transmitted thereto from the transaxle 20.

The accelerator pedal 24 is operated by the driver to supply an accelerator opening APS, which represents an operation amount of the accelerator pedal 24, to the ECU 28.

The eco switch (selection means) 26 is a switch that is operated to select a normal mode which permits a switching operation of switching a driving mode from a motor driving mode to an engine driving mode and a suppression mode which suppresses the switching operation. The result of the selection of the driving mode by the eco switch 26 is supplied to the ECU 28.

In this embodiment, the motor driving (the motor driving mode) denotes a driving in which the vehicle 10 is driven by use of the motor 14 only. The engine driving includes a hybrid driving mode in which both the motor 14 and the engine 16 are used and an engine driving mode in which only the engine 16 is used without using the motor 14. In the hybrid driving mode, the vehicle 10 is driven by the motor 14 to which electric power generated in the generator 18 driven by a drive power of the engine 16 is supplied. In the engine driving mode, the drive power of the engine 16 is directly transmitted to the driving wheels 22.

Additionally, the transaxle 20 may be configured so as to distribute the power supplied from the engine 16 for transmission to the two driving wheels 22. In this case, the engine driving includes a driving in which the power of the engine 16 is supplied to both the generator 18 and the transaxle, a driving in which the power of the engine 16 is supplied to only the generator 18, and a driving in which the power of the engine 16 is supplied to only the transaxle. The driving in which the power of the engine 16 is supplied to at least the transaxle is referred to as a parallel driving.

The ECU 28 includes a CPU, a ROM which stores control programs, a RAM functioning as operation areas of the control programs and interface modules which interface with peripheral circuits.

The ECU 28 executes the control programs to thereby control the motor 14, the engine 16, and the generator 18.

Namely, the ECU 28 controls the output of the motor 14 by making an output request to the motor 14.

Additionally, the ECU 28 controls the output of the engine 16 by making an engine driving request to the engine 16.

In addition, the ECU 28 controls the generated electric power by making a generation and output request to the generator 18.

Further, the ECU28 executes the control programs to realize a switching device 28A and a required output determination device 28B.

The switching device 28A executes a switching operation of switching the driving mode to the engine driving which employs the engine 16 when a drive output P which indicates a driving force required of the vehicle while the vehicle is being driven in the motor driving reaches or exceeds a threshold P1 which is predetermined.

The required output determination device 28B determines a drive output (the required output) P from an accelerator opening APS based on an output characteristic which relates the accelerator opening APS which results from the operation of an accelerator pedal by the driver with the drive output (the required output) P which corresponds to the accelerator opening APS. Here, the drive output and the required output mean the same thing.

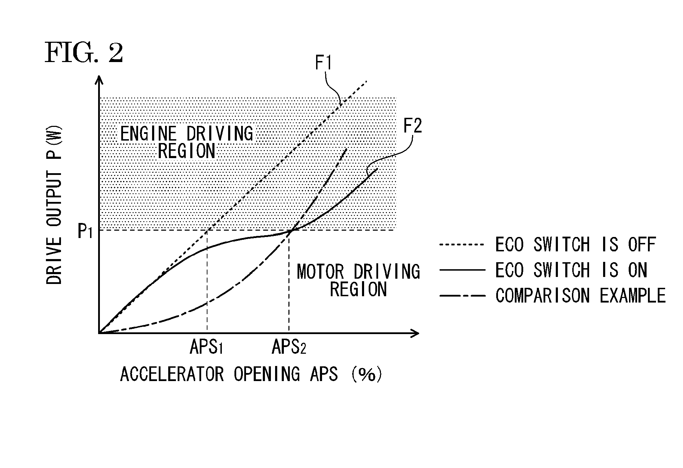

In this embodiment, an output characteristic map which shows an output characteristic shown in Fig. 2 is provided in the ROM of the ECU 28, for example.

In Fig. 2, an axis of abscissas represents accelerator opening (%), and an axis of ordinates represents drive output P(W), reference character P1 denoting a predetermined threshold.

Namely, a range where the drive output P is smaller than the threshold P1 is a motor driving region where the vehicle is driven by employing the motor 14 only, while a range where the drive output P is equal to or larger than the threshold P1 is an engine driving region where the vehicle is driven by employing the engine 16.

In the figure, a dotted line indicates a normal output characteristic F1 which corresponds to the normal mode which permits the switching operation of switching the driving mode from the motor driving to the engine driving, which corresponds to a state in which the eco switch 26 is switched off.

The normal output characteristic F1 is indicated by, for example, a straight line having a predetermined inclination or a curve.

In the figure, a solid line indicates a suppressed output characteristic F2 which corresponds to the suppression mode which suppresses the switching operation, which corresponds to a state in which the eco switch 26 is switched on.

The suppressed output characteristic F2 is made so that the increase rate of the drive output P is decreased as the accelerator opening APS is increased. Consequently, the suppression mode is a mode for suppressing the required output which corresponds to the accelerator opening APS (operation amount).

Here, when an accelerator opening APS in the output characteristic which results when the drive output P coincides with the threshold P1 is referred to as a switching operation amount, a switching operation amount APS2 for the suppressed output characteristic F2 becomes a value larger than a switching operation amount APS1 in the normal output characteristic F1.

The required output determination device 28B switches the normal output characteristic F1 and the suppressed output characteristic F2 for use as the output characteristic. Namely, when the eco switch 26 is off, the normal output characteristic F1 is used, whereas when the eco switch 26 is on, the suppressed output characteristic F2 is used.

When the suppression mode is selected by operating the eco switch 26 in this way, the increase rate of the drive output P is decreased as the accelerator opening APS is increased, and therefore, the driver is able to recognize easily that the suppression mode is employed.

In the drawing, an alternate long and short dash line indicates a characteristic which corresponds to a mode in a comparison example representing the related art which suppresses the switching to the engine driving, and this characteristic corresponds to the characteristic of the invention in which the eco switch 26 is on.

On the contrary to the invention, this characteristic is made so that the increase rate of the drive output P is increased as the accelerator opening APS is increased.

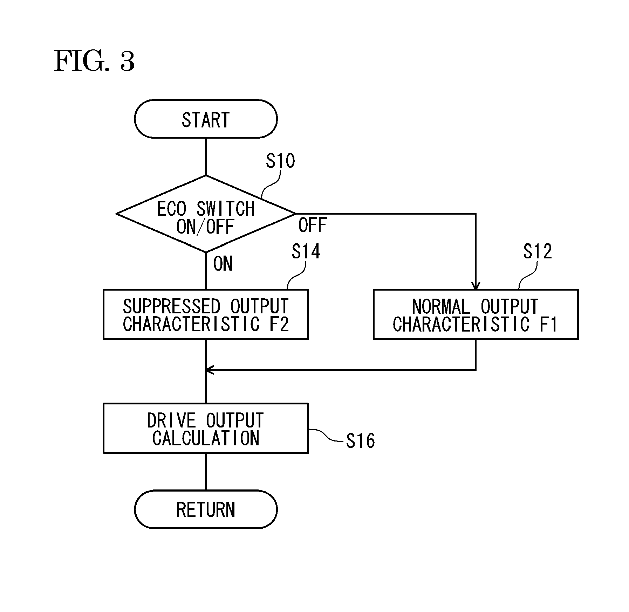

Next, the operation of the control unit 30 will be described by reference to a flowchart in Fig. 3.

Firstly, the required output determination device 28B determines on the state of the eco switch 26 (step S10). If it is determined that the eco switch 26 is off, the required output determination device 28B employs the normal output characteristic F1 as the output characteristic (step S12) and then calculates a drive output P from the normal output characteristic F1 based on the accelerator opening APS (step S16).

As a result, as shown in Fig. 2, the switching device 28A executes the motor driving when the drive output P is smaller than the threshold P1, while when the drive output P reaches or exceeds the threshold P1, the switching device 28A switches the driving mode from the motor driving to the engine driving. Namely, the switching device 28A executes the motor driving when the accelerator opening APS is in the range of smaller than the switching operation amount APS1, while the accelerator opening APS reaches or exceeds the switching operation amount APS1, the switching device 28A switches the driving mode from the motor driving to the engine driving.

If it is determined in step S10 that the eco switch 26 is on, the required output determination device 28B employs the suppressed output characteristic F2 as the output characteristic (step S14) and then calculates a drive output P from the suppressed output characteristic F2 based on the accelerator opening APS (step S16).

As a result, as shown in Fig. 2, the switching device 28A executes the motor driving when the drive output P is smaller than the threshold P1, while when the drive output P reaches or exceeds the threshold P1, the switching device 28A switches the driving mode from the motor driving to the engine driving. Namely, the switching device 28A executes the motor driving when the accelerator opening APS is in a range of smaller than the switching operation amount APS2, while when the accelerator opening APS reaches or exceeds the switching operation amount APS2, the switching device 28A switches the driving mode from the motor driving to the engine driving.

As shown in Fig. 2, the suppressed output characteristic F2 is made so that the increase rate of the drive output P is decreased as the accelerator opening APS is increased. Therefore, when the suppressed output characteristic F2 is employed, the suppressed output characteristic F2 takes almost the same value as that of the normal output characteristic F1 while the accelerator opening APS stays in a range from 0 to a predetermined value. Because of this, when the vehicle starts from a standstill or is being driven at low vehicle speeds, it is possible to obtains an accelerating response which is almost the same as that of the normal output characteristic F1, whereby the reduction in accelerating response is suppressed. In addition, when the drive output P stays in a range of equal to or larger than the threshold P1, the drive output P is suppressed more than in the normal output characteristic F1, and therefore, the fuel consumption is also suppressed, improving the fuel economy.

In contrast to this, in the output characteristic of the comparison example, when the accelerator opening APS stays in a range from 0 to a predetermined value, the driving force P is decreased largely, compared with that in the suppressed output characteristic F2 according to the invention. Therefore, the accelerating response is decreased when the vehicle starts from a standstill or is being driven at low vehicle speeds.

Thus, according to the embodiment that has been described heretofore, the suppressed output characteristic F2 is made so that the increase rate of the drive output P is decreased as the accelerator opening APS is increased. Therefore, the embodiment is advantageous in realizing the driving mode which ensures the accelerating response while suppressing accurately the switching of the driving mode from the motor driving to the engine driving.

### (Second Embodiment)

Next, a second embodiment will be described.

In the first embodiment, although the decrease in accelerating response can be suppressed when the vehicle starts from a standstill or is being driven at low vehicle speeds, the consumption of the battery electric power of the drive battery 12 by the motor 14 is increased. Because of this, depending upon driving conditions, the remaining charge level of the drive battery 12 is deteriorated early.

Then, in the second embodiment, a drive output P in a suppressed output characteristic F2 is made to be decreased as the remaining charge level of a drive battery 12 is decreased.

It should be noted that in the following embodiment like reference numerals will be given to like portions or members to those of the first embodiment so as to omit the description thereof or to describe them briefly.

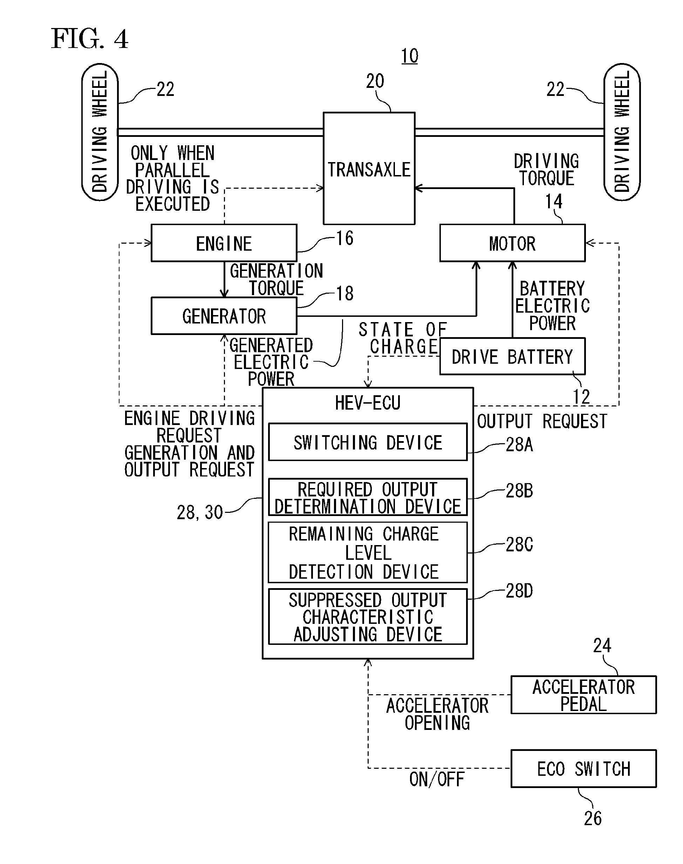

As shown in Fig. 4, an ECU 28 executes the control programs to thereby realize a remaining charge level detection device 28C and a suppressed output characteristic adjusting device 28D in addition to a switching device 28A and a required output determination device 28B.

The remaining charge level detection device 28C detects a remaining charge level of a drive battery 12 by reading out data on the remaining charge level of the drive battery 12 from a battery control unit, not shown.

The data on the remaining charge level employs a value called SOC (State of Charge) which indicates the charged state of the drive battery 12. The SOC is a numerical value defined as a ratio of residual charged amount to charge capacity of a battery. Conventionally known various parameters may be used as data representing remaining charge level.

The suppressed output characteristic adjusting device 28D decreases a drive output P in a suppressed output characteristic as the remaining charge level detected by the remaining charge level detection device 28C is decreased. In other words, a drive output P corresponding to a predetermined accelerator opening APS (operation amount) is decreased as the remaining charge level is decreased.

The suppressed output characteristic adjusting device 28D will be described specifically.

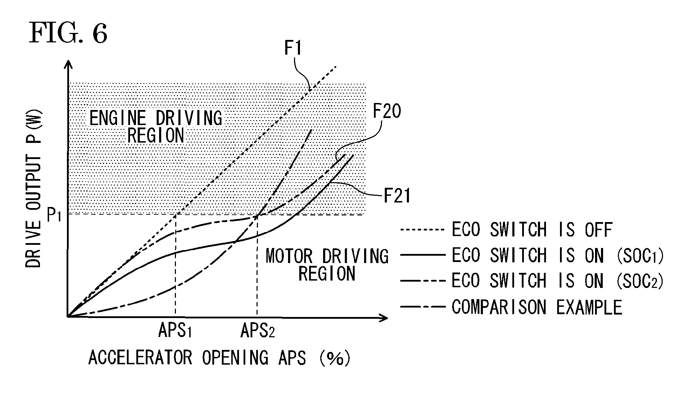

In the second embodiment, too, an output characteristic map which shows output characteristics is stored, for example, in a ROM of the ECU 28. The output characteristic map stores a normal output characteristic F1 shown in Fig. 6 and a reference suppressed output characteristic (not shown) which constitutes a reference.

The suppressed output characteristic adjusting device 28D calculates a suppressed output characteristic which corresponds to the SOC by multiplying the reference suppressed output characteristic by a drive output suppression rate ρ which is determined by the SOC. It should be noted that the drive output P is decreased as the drive output suppression rate ρ is increased.

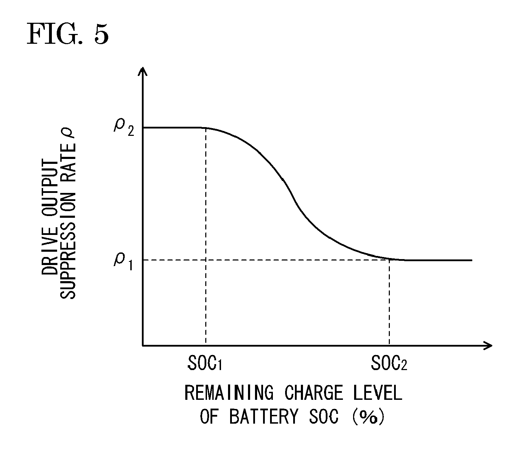

As shown in Fig. 5, the drive output suppression rate ρ is regulated so as to be increased as the SOC is decreased. Additionally, a map is stored in the ECU 28 in which the SOC and the drive output suppression rate ρ which are shown in Fig. 5 are related to each other.

As to the SOC, a first reference value SOC1 and a second reference SOC2 (>SOC1) are determined in advance. As to the drive output suppression rate ρ, a lower limit value ρ1 and an upper limit value ρ2 are determined in advance.

Within a range where SOC<SOC1, the drive output suppression rate ρ is fixed to the upper limit value ρ2.

Within a range where SOC1≤SOC≤SOC2, the drive output suppression rate ρ is set to lie between the upper limit value ρ2 and the lower limit value ρ1 and so that the drive output suppression rate ρ is decreased as the SOC is increased.

Within a range where SOC2<SOC, the drive output suppression rate ρ is fixed to the lower limit value ρ1.

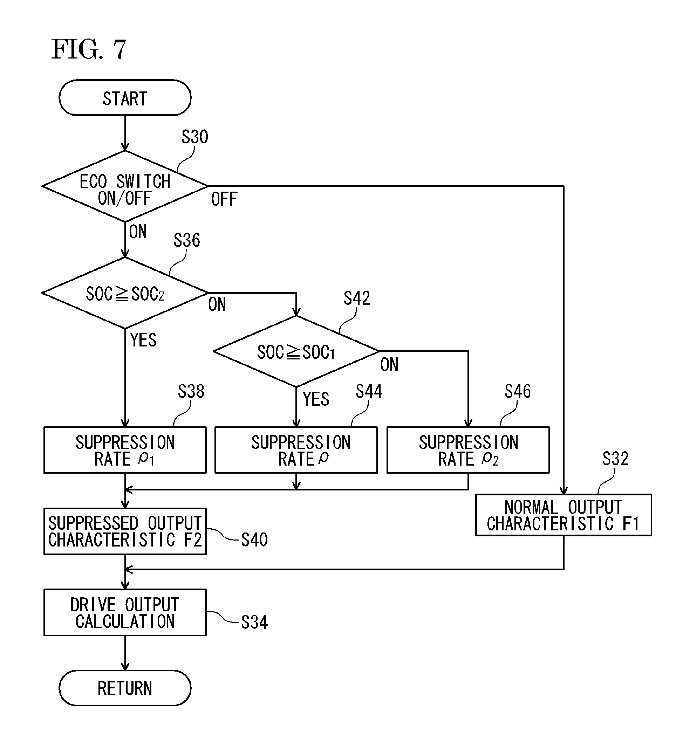

Next, the operation of a control unit 30 will be described by reference to a flowchart shown in Fig. 7.

Firstly, the required output determination device 28B determines on the state of an eco switch 26 (step S30). If it is determined that the eco switch 26 is off, the required output determination device 28B employs the normal output characteristic F1 as the output characteristic and then calculates a drive output P from the normal output characteristic F1 based on an accelerator opening APS (step S32, S34).

As a result, as shown in Fig. 6, the switching device 28A executes a motor driving when the drive output P is smaller than a threshold P1, while when the drive output P reaches or exceeds the threshold P1, the switching device 28A switches the driving mode from the motor driving to an engine driving. Namely, the switching device 28A executes the motor driving when the accelerator opening APS is in a range of smaller than a switching operation amount APS1, while when the accelerator opening APS reaches or exceeds the switching operation amount APS1, the switching device 28A switches the driving mode from the motor driving to the engine driving.

If it is determined in step S30 that the eco switch 26 is on, the suppressed output characteristic adjusting device 28D determines whether or not the SOC of the drive battery 12 detected by the remaining charge level detection device 28C is equal to or larger than the second reference value SOC2 (step S36).

If it is determined in step S36 that the SOC of the drive battery 12 is equal to or larger than the second reference SOC2, the suppressed output characteristic adjusting device 28D determines based on the map in Fig. 5 that the drive output suppression rate ρ = lower limit value ρ1 and calculates a suppressed output characteristic F2 by multiplying the reference suppressed output characteristic by the suppression rate so determined (step S38, S40). It should be noted that in Fig. 6 the suppressed output characteristic calculated by the lower limit value ρ1 is indicated by a suppressed output characteristic F20.

On the other hand, if it is determined in step S36 that the SOC of the drive battery 12 is smaller than the second reference value SOC2, the suppressed output characteristic adjusting device 28D determines whether or not the SOC of the drive battery 12 detected by the remaining charge level detection device 28C is equal to or larger than the first reference value SOC1, that is, whether or not the SOC is equal to or larger than the first reference value SOC1 and smaller than the second reference value SOC2 (step S42).

If it is determined in step S42 that the SOC of the drive battery 12 is equal to or larger than the first reference value SOC1, the suppressed output characteristic adjusting device 28D determines a drive output suppression rate ρ based on the map shown in Fig. 5 and calculates a suppressed output characteristic F2 by multiplying the reference suppressed output characteristic by the suppression rate so determined (steps S44, S40).

In addition, if it is determined in step S42 that the SOC of the drive battery 12 is smaller than the first reference value SOC1, the suppressed output characteristic adjusting device 28D determines based on the map in Fig. 5 that the drive output suppression rate ρ = upper limit value ρ2 and calculates a suppressed output characteristic F2 by multiplying the reference suppressed output characteristic by the suppression rate so determined (step S46, S40). It should be noted that in Fig. 6 the suppressed output characteristic calculated by the upper limit value ρ2 is indicated by a suppressed output characteristic F21. The suppressed output characteristic F21 takes a smaller value for the drive output P than a value taken by the suppressed output characteristic F20.

In addition, the required output determination device 28B employs the suppressed output characteristic F2 calculated in step S40 as the output characteristic and calculates a drive output P from the suppressed output characteristic F2 based on the accelerator opening APS (step S34).

As a result, as shown in Fig. 6, the switching device 28A executes the motor driving with the drive output P being smaller than the threshold P1, while with the drive output P being equal to or larger than the threshold P1, the switching device 28A switches the driving mode from the motor driving to the engine driving.

According to the second embodiment, the same advantage as that provided by the first embodiment can be provided. In addition, the drive output P in the suppressed output characteristic is made to be decreased as the remaining charge level (SOC) of the drive battery 12 is decreased, and therefore, the consumption of battery electric power that is consumed by the motor 14 can be suppressed as the remaining charge level of the drive battery 12 is decreased.

Consequently, the early decrease in remaining charge level of the drive battery 12 can be avoided, which is advantageous in realizing the extension of time during which the motor driving can be implemented by the drive battery 12.

Thus, as has been described heretofore, according to the invention, the output characteristic in executing the motor driving is made so that the increase rate of the drive output is decreased as the operation amount is increased. Therefore, the invention is advantageous in realizing the driving mode which ensures the accelerating response while suppressing accurately the switching from the motor driving to the engine driving.

Additionally, the drive output which corresponds to the predetermined accelerator pedal operation amount is made so as to be decreased as the remaining charge level of the battery is decreased. Therefore, the consumption of battery electric power that is supplied to the motor can be suppressed more as the remaining charge level of the battery is decreased.

Further, the increase rate of the drive output is decreased as the accelerator pedal operation amount is increased when the suppression mode is selected. Therefore, the driver is allowed to recognize easily that the suppression mode is in use.

The invention is not limited strictly to the embodiments that have been described heretofore, and hence, when it is carried out, the invention can be embodied variously by modifying the constituent elements without departing from the spirit and scope thereof. Additionally, various inventions can be formed by appropriate combinations of the plurality of constituent elements that are disclosed in the embodiments. For example, some of all the constituent elements that are shown in the embodiments may be deleted. Further, constituent elements resulting in different embodiments may also be combined as required.

This patent application is based upon Japanese Patent Application No. 2011-158936 filed on July 20, 2011, the contents of which are incorporated herein byway of reference.

## Claims

1. A control unit for a hybrid vehicle which includes an engine and a motor and which is configured to be switched between a motor driving mode in which the vehicle is driven by the motor, an engine driving mode in which the vehicle is driven by the engine and a hybrid driving mode in which the hybrid vehicle is driven by both of the motor and the engine, **characterized in** comprising:
a required output determination device configured to determine a required output based on an output characteristic in which an operation amount of an accelerator pedal and a drive output corresponding to the operation amount are related to each other,
wherein the output characteristic in the motor driving mode is such that an increase rate of the drive output is decreased as the operation amount is increased.

2. The control unit for a hybrid vehicle as set forth in Claim 1, further comprising:
a remaining charge level detection device configured to detect a remaining charge level of a battery which supplies electric power to the motor,
wherein the drive output corresponding to an operation amount of the accelerator pedal is decreased as the remaining charge level is decreased.

3. The control unit for a hybrid vehicle as set forth in Claims 1 or 2, further comprising:
a selecting device configured to select a suppression mode in which the required output corresponding to the operation amount is suppressed, when a driver input is received,
wherein, in a state where the suppression mode is selected by the selection device, the required output determination device determines the required output based on the output characteristic.
